# EUROPEAN PATENT APPLICATION

(11) **EP 2 759 522 A1**
(43) Date of publication of application: **30.07.2014**
(21) Application number: 12833239.2
(22) Date of filing: 20.09.2012
(51) Int. Cl.: C03C 3/089, C03B 27/012

(54) **GLASS PLATE FOR TEMPERING**

(30) Priority: 22.09.2011 JP 2011207710
(71) Applicant: Asahi Glass Company, Limited, Tokyo 100-8405 (JP)
(72) Inventor: ONO, Madoka, Tokyo 100-8405 (JP); KOIKE, Akio, Tokyo 100-8405 (JP); AMMA, Shinichi, Tokyo 100-8405 (JP); ITO, Setsuro, Tokyo 100-8405 (JP)
(74) Representative: Müller-Boré & Partner Patentanwälte PartG mbB
(86) International application number: PCT/JP2012/074089
(87) International publication number: WO 2013/042739

(57) **Abstract**

To provide a glass plate to be tempered, which has a low thermal expansion coefficient at relatively low temperature, and which can have a sufficiently high surface compression stress by a conventional heat tempering process, even when it is thin.

A glass plate to be tempered, which contains B₂O₃ in a range of from 12.5 to 35 mol% in its composition, the difference [X-Y] between the total content X of compounds selected from MgO, CaO, BaO, Na₂O and K₂O in the composition and the content Y of B₂O₃ in the composition being within a range of from -5 to 10 mol%, and which is to be tempered by heating and quenching.

## Description

### TECHNICAL FIELD

The present invention relates to a glass plate to be tempered, which can be tempered at a level of conventional soda-lime glass or higher even when it is thin, and a tempered glass plate obtained by tempering the glass plate.

### BACKGROUND ART

Tempered glass solves a problem that glass is fragile and thereby is currently used for vehicles and buildings. The tempered glass in the present invention is tempered glass utilizing heat shrinkage of glass so called heat reinforcement or physical reinforcement and means tempered glass for windows of vehicles such as cars, trucks, buses, trains, ships and aircrafts, tempered glass used for headlights and taillights, tempered glass used for windows, doors and show windows of buildings and houses, tempered glass used for furniture or office supplies such as partitions, desktops, bookshelves or showcases, or tempered glass used for cookware or consumer electronics.

Tempered glass for vehicles and buildings is produced by a heat reinforcement method or an air quenching reinforcement method wherein a glass plate produced by e.g. a float method is heated to a softening point or a vicinity of a deformation point and then quenched by blowing air on the surface of the glass plate.

In this method, heat shrinkage of glass at a time of cooling by blowing air is utilized, a glass surface is cooled first, and the glass surface shrinks. Then, the inside of the glass shrinks by gradual cooling. Thus, the compression stress remains in the glass surface, whereby the strength of the glass is improved. Further, since the compression stress remains in the surface of the tempered glass, there are also such effects that scratches on the glass surface are prevented from spreading, and the scratch durability is improved.

In recent year, when tempered glass is used as glass for vehicles, etc., it is desired to reduce weight of glass itself from the viewpoint of improvement of fuel efficiency by weight saving of the vehicle. Particularly, needs for such weight saving are very increasing in view of environmental problems by exhaust gas and in view of increase of the range of new-generation vehicles such as hybrid cars and electric vehicles. Weight saving of glass can be achieved by decrease in the density and decrease in the thickness of glass.

With respect to the decrease in the density, in general, soda lime silica glass produced by a float method and used as a glass plate to be tempered has a density of about 2.5 g/cm³ at room temperature, and silica glass has a density of about 2.2 g/cm³. Thus there is a limitation to reduce the density.

On the other hand, with respect to the decrease in the thickness of glass, as a technique to overcome the strength decrease, glass tempering is known. However, in heat tempering of glass, glass is tempered by utilizing the difference of temperature between a surface of glass and its inside at a time of cooling. Thus, in a case of thin glass having a thickness of at most 2.8 mm, the difference of temperature tends to be small, and such glass is hardly tempered. A glass plate to be heat tempered preferably has a large temperature difference between a temperature in the vicinity of a deformation point where heat tempering starts and a temperature in the vicinity of a strain point where deformation is frozen, or a high linear thermal expansion coefficient at high temperature in the vicinity of a deformation point, whereby it is smoothly tempered. However, such glass has a high linear thermal expansion coefficient from a low temperature and thereby is not appropriate in applications in which a low linear thermal expansion coefficient at a relatively low temperature is desired.

To solve such problems, glass excellent in heat tempering property even when it is thin has been known (for example, Patent Document 1).

### PRIOR ART DOCUMENT

### PATENT DOCUMENT

Patent Document 1: JP-A-2003-119048

### DISCLOSURE OF INVENTION

### TECHNICAL PROBLEM

Patent Document 1 discloses glass which can be tempered even when it is thin.

That is, it discloses that by employing a glass composition within a specific range and adjusting the average linear thermal expansion coefficient of glass at from 50 to 350°C to from 80 to 110×10⁻⁷/°C, the stress generated by tempering can be made high while deformation of the glass in the cooling step after heating is suppressed. However, in order to obtain glass which is more likely to be tempered, it is effective to control also the linear thermal expansion coefficient in the vicinity of the tempering temperature (for example, the deformation point) and to increase the stress generated by tempering, but a technique which simultaneously optimizes the linear thermal expansion coefficients in both the temperature regions has not been known.

The present invention provides a glass plate to be tempered, which has a high linear thermal expansion coefficient at high temperature while the linear thermal expansion coefficient particularly at low temperature is suppressed, which thereby has a high initiation stress by heat tempering, and which can be sufficiently tempered even if it is thin, and a tempered glass plate obtained by tempering it.

### SOLUTION TO PROBLEM

The present invention provides a glass plate to be tempered, which contains, as components in a glass composition, B₂O₃ in a range of from 12.5 to 35 mol% in the composition and contains at least one compound selected from the group consisting of MgO, CaO, BaO, Na₂O and K₂O, and the difference [X-Y] between the total content X of these compounds in the composition and the content Y of B₂O₃ in the composition being within a range of from -5 to 10 mol%, and which is to be tempered by heating and quenching.

The present invention further provides a glass plate to be tempered, which has a glass composition containing, as represented by the following oxides, B₂O₃, SiO₂ and Na₂O and further at least one member selected from the group consisting of CaO, BaO, MgO and K₂O, and in the glass composition, the content of B₂O₃ being from 12.5 to 35 mol%, and the difference [X-Y] between the content Y of B₂O₃ and the total content X of the above components Na₂O, K₂O, CaO, BaO and MgO being within a range of from -5 to 10 mol%, and which is to be tempered by heating and quenching.

The present invention further provides the above glass plate to be tempered, wherein the difference [α₂-α₁] between the average linear expansion coefficient α₁ at from 50 to 350°C and the linear expansion coefficient α₂ at a temperature in the middle of the glass transition point and the deformation point is at least 450×10⁻⁷/°C.

The present invention further provides the above glass plate to be tempered, wherein the average linear expansion coefficient α₁ at from 50 to 350°C is at least 30×10⁻⁷/°C and less than 100×10⁻⁷/°C.

The present invention further provides the above glass plate to be tempered, wherein the linear expansion coefficient α₂ at a temperature in the middle of the glass transition point and the deformation point is at least 500×10⁻⁷/°C and at most 1,300× 10⁻⁷/°C.

The present invention further provides a tempered glass plate which is obtained by tempering the above glass plate to be tempered by heating and quenching, and which has an initiation stress after tempering of at least 35 MPa.

In this specification, " to " used to show the range of the numerical values is used to include the numerical values before and after it as the lower limit value and the upper limit value, and unless otherwise specified, the same applies hereinafter.

### ADVANTAGEOUS EFFECTS OF INVENTION

According to the present invention, it is possible to obtain a glass plate to be tempered, which can have a sufficiently high surface compression stress by a conventional heat tempering process while having a low thermal expansion coefficient in a relatively low temperature region even when it is thin. As a result, it is possible to obtain tempered glass which is excellent in the scratch durability and is very light in weight.

### DESCRIPTION OF EMBODIMENTS

The glass plate to be tempered of the present invention preferably has an average linear thermal expansion coefficient α₁ of less than 100×10⁻⁷/°C at from 50 to 350°C. If the average linear thermal expansion coefficient α₁ is at least 100×10⁻⁷/°C, various problems may arise depending on applications of the tempered glass plate. For example, in steps for production of laminated glass for automobiles, the change in dimension due to the difference of temperature becomes large, and thereby defects tend to occur. Further, if the temperature is quickly raised from a low temperature, tensile stress results on a glass surface, and glass is easily broken. The more preferred range of the average linear thermal expansion coefficient α₁ is less than 90×10⁻⁷/°C. In applications desired to reduce the change in dimension in a heating step such as an application for electronics such as a display, the average linear thermal expansion coefficient is more preferably less than 85×10⁻⁷/°C, particularly preferably less than 80×10⁻⁷/°C.

Further, the glass plate to be tempered of the present invention preferably has an average linear thermal expansion coefficient α₁ of at least 30×10⁻⁷/°C at from 50 to 350°C. If the linear thermal expansion coefficient is less than 30×10⁻⁷/°C, stress due to physical tempering may not be high. The average linear thermal expansion coefficient is more preferably at least 60×10⁻⁷/°C, particularly preferably at least 70×10⁻⁷/°C.

The glass plate to be tempered of the present invention preferably has a temperature at a glass transition point (hereinafter "the temperature at a glass transition point" will sometimes be referred to simply as "glass transition point") of at most 750°C. If the glass transition point exceeds 750°C, the glass plate should be treated at high temperature for tempering, and accordingly peripheral members such as a member for holding the glass plate and a jig are exposed to high temperature when the glass plate is tempered, whereby problems may arise such that the life of the peripheral members is remarkably shortened, and expensive members excellent in the heat resistance are required as the peripheral members. More preferably, the glass transition point is at most 700°C. Further, the glass transition point is preferably at least 400°C. If the glass transition point is less than 400°C, the difference in temperature by heating and quenching in the glass plate at the time of tempering tends to be small, whereby the stress generated by tempering may be low. The glass transition point is more preferably at least 450°C, further preferably at least 500°C.

The glass plate to be tempered of the present invention preferably has a temperature at a deformation point (hereinafter "the temperature at a glass deformation point" will sometimes be referred to simply as "glass deformation point") of at least 640°C. If the deformation point is less than 640°C, the tempering starting temperature becomes low, and the stress generated by tempering may be low. It is more preferably at least 660°C. Further, the glass plate to be tempered of the present invention preferably has a deformation point of at most 750°C. If the deformation point exceeds 750°C, the glass plate should be treated at high temperature for tempering, and accordingly peripheral members such as a member for holding the glass plate and a jig are exposed to high temperature when the glass plate is tempered, whereby problems may arise such that the life of the peripheral members is remarkably shortened, or expensive members excellent in the heat resistance are required. The deformation point is more preferably at most 700°C.

The glass plate to be tempered of the present invention preferably has a linear expansion coefficient α₂ at a temperature in the middle of the glass transition point and the deformation point of at least 500×10⁻⁷/°C. In this specification, the temperature in the middle of the glass transition point and the deformation temperature means the temperature of (the temperature at the glass transition point+the temperature at the deformation point)/2. If the linear expansion coefficient α₂ is less than 500×10⁻⁷/°C, the stress generated by tempering may be low. The linear expansion coefficient α₂ is more preferably at least 600×10⁻⁷/°C, further preferably at least 700×10⁻⁷/°C. Further, the linear expansion coefficient α₂ is preferably at most 1,300×10⁻⁷/°C. If the linear expansion coefficient α₂ exceeds 1,300×10⁻⁷/°C, when the glass plate is quenched for tempering, a tensile stress is temporarily applied to the vicinity of the surface, however, a drawback may occur such that the stress is too high and the glass will be broken. The linear expansion coefficient α₂ is more preferably at most 1,250×10⁻⁷/°C, further preferably at most 1,200×10⁻⁷/°C.

The temperatures at the glass transition point and the deformation point vary depending upon the composition of the glass plate and are not generally defined. For example, the glass transition point is from 560°C to 620°C, and the temperature at the deformation point is from 620°C to 680°C.

Of the glass plate to be tempered of the present invention, the difference [α₂-α₁] between the average linear thermal expansion coefficient α₁ at from 50 to 350°C and the linear expansion coefficient α₂ at a temperature in the middle of the glass transition point and the deformation point is preferably at least 450×10⁻⁷/°C. In the glass physical tempering process, [α₂-α₁] represents a difference between the linear expansion coefficient at high temperature at the time of heating and the linear expansion coefficient at low temperature at the time of cooling, and is an index of how the glass is tempered. If [α₂-α₁] is less than 450×10⁻⁷/°C, the stress generated by tempering may be low. It is more preferably at least 500×10⁻⁷/°C, further preferably at least 550x 10⁻⁷/°C.

The glass plate to be tempered of the present invention preferably has a density at room temperature of less than 2.75 g/cm³. If the density is at least 2.75 g/cm³, the glass itself tends to be heavy. Further, glass having a low density tends to have a low coefficient of thermal conductivity, and is thereby likely to have a stress at a time of heat tempering. The density is more preferably less than 2.70 g/cm³, further preferably less than 2.65 g/cm³.

Now, the composition of the glass plate to be tempered of the present invention will be described. The respective components are represented by mol%.

The composition of the glass plate to be tempered of the present invention, as represented by the following oxides, is as follows.
B₂O₃: 12.5 to 35 mol%,
SiO₂: 50 to 85 mol%,
Na₂O: 12.5 to 30 mol%,
K₂O: 0 to 30 mol%,
CaO: 0 to 10 mol%,
BaO: 0 to 10 mol%,
MgO: 0 to 5 mol%,
Al₂O₃: 0 to 20 mol%.

B₂O₃ has an effect to improve the durability of glass. The glass plate of the present invention contains B₂O₃ in a range of from 12.5 to 35 mol% in the glass composition. If the content of B₂O₃ is less than 12.5 mol%, no sufficient compression stress will be obtained in the glass surface by heat tempering. It is more preferably at least 13.5 mol%, further preferably at least 14.5 mol%. On the other hand, if the content of B₂O₃ exceeds 35 mol%, the glass is likely to undergo phase separation, the chemical durability of glass tends to be low, and the life of a furnace tends to be short by volatilization of boric acid. It is more preferably at most 30 mol%, further preferably at most 25 mol%.

The content of SiO₂ is preferably at least 50 mol%. If it is less than 50 mol%, problems arise such that the thermal expansion coefficient in the low temperature region tends to be high, the scratch durability tends to be deteriorated, and the glass transition temperature tends to be too low. It is more preferably at least 55 mol%, further preferably at least 60 mol%. Further, the content of SiO₂ of the glass plate of the present invention is preferably at most 85 mol%. If the content of SiO₂ exceeds 85 mol%, the viscosity tends to be high, whereby the glass is less likely to be melted. It is more preferably at most 80 mol%, further preferably at most 75 mol%.

Na₂O is a component which remarkably increase the expansion coefficient in the high temperature region without increasing the expansion coefficient in the low temperature region when its content is appropriate. The content of Na₂O of the glass plate of the present invention is preferably at least 12.5 mol%, more preferably at least 14 mol%, further preferably at least 15 mol%. Further, the content of Na₂O of the glass plate of the present invention is preferably at most 30 mol%. If it exceeds 30 mol%, the temperature difference between the strain point and the deformation point tends to be small, and the stress generated by tempering tends to be low. Further, a problem may arise such that the thermal expansion coefficient is too high. It is more preferably at most 25 mol%, further preferably at most 22.5 mol%.

K₂O is a component which remarkably increases the expansion coefficient in the high temperature region without increasing the expansion coefficient in the low temperature region when its content is appropriate. The content of K₂O of the glass plate of the present invention is preferably from 0 to 30 mol%. It is more preferably at least 12.5 mol%, further preferably at least 14 mol%. Further, if the K₂O content of the glass plate of the present invention exceeds 30 mol%, a problem is likely to arise such that the expansion coefficient in the low temperature region is too high. It is more preferably at most 25 mol%, further preferably at most 22.5 mol%.

CaO increases the thermal expansion coefficient of glass at high temperature. The content of CaO of the glass plate of the present invention is preferably from 0 to 10 mol%. The content of CaO of the glass plate of the present invention is more preferably at least 1 mol%, further preferably at least 3 mol%, still further preferably at least 5 mol%. Further, if the CaO content of the glass plate of the present invention exceeds 10 mol%, the glass undergoes phase separation and is devitrified. Further, a problem is likely to arise such that the glass will not be melted. It is more preferably at most 9 mol%, further preferably at most 8 mol%.

BaO also increases the thermal expansion coefficient at high temperature, like

CaO. The content of BaO of the glass plate of the present invention is preferably from 0 to 10 mol%. It is more preferably at least 1 mol%, further preferably at least 3 mol%, particularly preferably at least 5 mol%. Further, if the BaO content of the glass plate of the present invention exceeds 10 mol%, problems are likely to arise such that the specific gravity of the glass is high, and the glass is devitrified. It is more preferably at most 9 mol%, further preferably at most 8 mol%, particularly preferably at most 7 mol%.

MgO maintains the thermal expansion coefficient of glass appropriately. The content of MgO of the glass plate of the present invention is preferably at least 0 mol% and at most 5 mol%.

Al₂O₃ is a component to improve the durability of glass, and is not an essential component in the glass plate of the present invention, but is properly added to the composition within a range of at most 20 mol%.

The glass plate to be tempered of the present invention substantially comprises the above components, and may contain other components within a range not to impair the object of the present invention. Such other components may, for example, be ZnO, SrO, Li₂O, Fe₂O₃, FeO, ZrO₂, TiO₂, Y₂O₃ or CeO₂. Further, as a clarifying agent at the time of melting glass, SO₃ a chloride, a fluoride, a halogen, SnO₂, Sb₂O₃, As₂O₃ or the like may properly be contained. Further, for adjusting color, Ni, Co, Cr, Mn, V, Se, Au, Ag, Cd, Cu, Ge or the like may be contained.

The glass plate to be tempered of the present invention contains, as a component in a glass composition, B₂O₃ in a range of from 12.5 to 35 mol% in the composition, and the difference [X-Y] between the total content X in the composition of compounds selected from MgO, CaO, BaO, Na₂O and K₂O, and the content Y of B₂O₃ in the composition, being within a range of from -5 to 10 mol%. If [X-Y] is out of the range of from -5 to 10 mol%, a thermal expansion coefficient suitable for tempering is hardly obtained. It is preferred that B₂O₃ is contained in the composition within a range of from 12.5 to 35 mol%, and [X-Y] is within a range of from -2.5 to 5 mol%.

Further, the glass plate to be tempered of the present invention has a glass composition containing, as represented by the following oxides, B₂O₃, SiO₂ and Na₂O and further at least one member selected from the group consisting of CaO, BaO, MgO and K₂O, and in the glass composition, the content of B₂O₃ being from 12.5 to 35 mol%, and the difference [X-Y] between the content Y of B₂O₃ and the total content X of the above components Na₂O, K₂O, CaO, BaO and MgO being within a range of from -5 to 10 mol%.

The linear thermal expansion coefficient, the glass transition point and the deformation point of the glass plate to be tempered are measured as follows. A columnar sample having a diameter of 5 mm and a length of 20 mm is prepared, and measurement is carried out at a temperature raising rate of 5°C/min using a thermal dilatometer to obtain the average linear expansion coefficient α₁ at from 50 to 350°C, the glass transition point, the deformation point and the linear expansion coefficient α₂ at a temperature in the middle of the glass transition point and the deformation point.

The glass plate to be tempered of the present invention preferably has a plate thickness of at least 1.0 mm. If it is less than 1.0 mm, the surface compression stress generation by tempering may not be high. It is more preferably at least 1.4 mm, further preferably at least 1.8 mm.

The glass plate to be tempered of the present invention may be produced by any of a float method, a fusion method, a downdraw method and a roll out method. By the float method, mass production of a glass plate having a plate thickness of at least 1.3 mm and a large area can easily be carried out, and the deviation of the plate thickness can be easily reduced, such being preferred.

A tempered glass plate comprising the glass plate to be tempered of the present invention preferably has a Young's modulus of at least 70 GPa. When it is at least 70 GPa, the breaking strength tends to be higher. It is more preferably at least 75 GPa.

The tempered glass plate comprising the glass plate to be tempered of the present invention preferably has a photoelastic constant of at most 3.5×10⁻⁷cm²/kg. If it exceeds 3.5×10⁻⁷ cm²/kg, when the tempered glass plate is used as a cover glass for a display, or the brightness is controlled by polarization, discoloration tends to occur. It is more preferably at most 3.2×10⁻⁷ cm²/kg.

The tempered glass plate comprising the glass plate to be tempered of the present invention preferably has an initiation stress of at least 35 MPa. Here, the initiation stress means a surface compression stress generated in the surface of the tempered glass plate. The initiation stress in the tempered glass plate of the present invention is measured as follows. A disk which has dimensions of 20 mm in diameter × 5 mm (in thickness) and all the surfaces of which are mirror surfaces, is prepared from annealed glass. Using the prepared disk, a photoelectric constant is obtained by the method of compression on circular plate. Then, each disk sample is hung by using a wire made of platinum in a platinum crucible and held at a temperature higher than the glass transition point by 125°C for 10 minutes. The platinum crucible used has a pipe shape having a diameter of about 6 cm and a height of about 10 cm, and the glass is placed in at the almost center of the platinum crucible. After heating, the glass contained in the crucible is taken out, and the glass is quenched by quenching the crucible in air atmosphere. The retardation of the produced quenched glass is measured by a deformation tester (manufactured by TOSHIBA CORPORATION). Further, by dividing the retardation value by the above photoelastic constant, the initiation stress is obtained. If the initiation stress thus obtained is less than 35 MPa, the glass plate is not sufficiently tempered, and the glass plate may be broken and in addition, such a drawback is likely to occur that the size of glass pieces which will be formed when the glass plate is broken will not be at most 15 mm. The initiation stress is more preferably at least 40 MPa, further preferably at least 45 MPa.

### EXAMPLES

Now, the present invention will be described in detail with reference to Examples. However, it should be understood that the present invention is by no means restricted to such specific Examples.

Conventionally used glass materials such as oxides, hydroxides, carbonates and nitrates were appropriately selected so as to achieve the glass compositions (Examples of the present invention) represented by mol% in Table 1 and the glass compositions (Comparative Examples) represented by mol% in Table 2, and weighed so as to be 500 g as glass and mixed. Then, the mixture was put into a platinum crucible. The platinum crucible was put in an electrical resistance heating type electric furnace at 1,450°C, and the mixture was melted for 1 hour, poured into a mold, granulated by being dipped in a container filled with water, and crushed into pieces of at most 15 mm. Then, the pieces were put in a platinum crucible again and melted for 2 hours, defoamed, poured into a mold, held at a temperature higher than the glass transition point by about 30°C for 1 hour and then cooled to room temperature at a cooling rate of 1°C per minute to prepare annealed glass.

In conformity with JIS R3103-3:2001, a columnar sample (glass rod) having a diameter of 5 mm and a length of 20 mm was produced from the above prepared glass, and a glass transition point was obtained by measuring at a temperature raising rate of 5°C/min by using a thermal dilatometer (TD5010SA, manufactured by Bruker AXS K.K.). Further, as a method of measuring the deformation point, a load of 10 g was applied to the above glass rod, and the temperature at a point when the glass rod started shrinking was measured to obtain the deformation point.

In conformity with JIS R1618:2002, an average linear expansion coefficient α₁ at from 50 to 350°C was obtained by measurement at a temperature raising rate of 5°C/min by using a thermal dilatometer (TD5010SA, manufactured by Bruker AXS K.K.) in the same manner as the measurement of the glass transition point. Further, the linear thermal expansion coefficient α₂ at a temperature in the middle of the glass transition point and the deformation point was obtained from the same data.

A sample having a thickness of about 10 mm was produced by polishing the produced glass so that both surfaces of the glass plate of 4 cm × 4 cm would be in parallel, and the density was obtained by the Archimedes' method, and the Young's modulus was obtained by the ultrasonic pulse method.

In order to evaluate the easiness of tempering by air quenching of the obtained glass, stress generated by tempering by heating and quenching was measured. First, a disk which has dimensions of 20 mm in diameter × 5 mm in thickness and all the surfaces of which are mirror surfaces was prepared from the annealed glass. By using the prepared glass, the photoelastic constant was obtained by the method of compression circular plate. Then, each glass disk sample was hung by using a wire made of platinum in a platinum crucible and held at a temperature higher than the glass transition point by 125°C for 10 minutes. The platinum crucible used had a pipe shape having a diameter of about 6 cm and a height of about 10 cm, and the glass was placed in at the almost center of the platinum crucible. After heating, the glass contained in the crucible was taken out, and the glass was quenched by quenching the crucible in air atmosphere. The retardation of the produced quenched glass was measured by a deformation tester (manufactured by TOSHIBA CORPORATION). Further, by dividing the retardation value by the above photoelastic constant, the initiation stress was obtained. The obtained results are shown in Tables 1 and 2. Examples 1 to 8 are Examples of the present invention, and Examples 9 to 13 are Comparative Examples.

**[Table 1]**

| Ex. | 1 | 2 | 3 | 4 | 5 | 6 | 7 | 8 |
|---|---|---|---|---|---|---|---|---|
| SiO₂ | 60 | 60 | 66.66 | 60 | 63.2 | 57 | 60 | 60 |
| Al₂O₃ | 0 | 0 | 0 | 0 | 0 | 0 | 0 | 10 |
| B₂O₃ | 20 | 20 | 16.66 | 20 | 15.8 | 24 | 15 | 10 |
| Na₂O | 15 | 15 | 16.66 | 20 | 21.1 | 19 | 25 | 20 |
| K₂O | 0 | 0 | 0 | 0 | 0 | 0 | 0 | 0 |
| MgO | 0 | 0 | 0 | 0 | 0 | 0 | 0 | 0 |
| CaO | 0 | 5 | 0 | 0 | 0 | 0 | 0 | 0 |
| BaO | 5 | 0 | 0 | 0 | 0 | 0 | 0 | 0 |
| Fe (calculated as Fe₂O₃) | 0 | 0 | 0 | 0 | 0 | 0 | 0 | 0 |
| X-Y | 0 | 0 | 0 | 0 | 5.3 | -5 | 10 | 10 |
| α₁ (×10⁻⁷/°C) | 83.5 | 78.9 | 69.5 | 74.2 | 82.9 | 70.6 | 97.0 | 87.3 |
| Glass transition point (°C) | 590 | 584 | 611 | 604 | 594 | 593 | 562 | 589 |
| Deformation point (°C) | 645 | 643 | 677 | 667 | 659 | 655 | 628 | 654 |
| α₂ (×10⁻⁷/°C) | 1054 | 1009 | 845 | 837 | 897 | 650 | 771 | 670 |
| α₂-α₁ (×10⁻⁷/°C) | 970.5 | 930.1 | 775.5 | 762.8 | 814.1 | 579.4 | 674.0 | 582.7 |
| Density (g/cm³) | 2.69 | 2.51 | 2.45 | 2.46 | - | - | - | - |
| Young's modulus (GPa) | 83.4 | 81.6 | 78.2 | 84.0 | - | - | - | - |
| Photoelastic constant (×10⁻⁷ cm²/kg) | 2.9 | 3.1 | 3.2 | 3.1 | - | - | - | - |
| Retardation (nm/cm) | 1375 | 1283 | 1131 | 1100 | - | - | - | - |
| initiation stress (MPa) | 46.9 | 41.5 | 35.6 | 35.1 | - | - | - | - |

**[Table 2]**

| Ex. | 9 | 10 | 11 | 12 | 13 |
|---|---|---|---|---|---|
| SiO₂ | 60 | 74.21 | 77.27 | 71.25 | 80.11 |
| Al₂O₃ | 0 | 1.12 | 1.19 | 1.05 | 1.32 |
| B₂O₃ | 25 | 2.75 | 5.57 | 0 | 8.34 |
| Na₂O | 15 | 10.44 | 8.31 | 12.53 | 6.21 |
| K₂O | 0 | 0.19 | 0.13 | 0.31 | 0.06 |
| MgO | 0 | 4.31 | 2.86 | 5.74 | 1.52 |
| CaO | 0 | 6.95 | 4.65 | 9.09 | 2.4 |
| BaO | 0 | 0 | 0 | 0 | 0 |
| Fe (calculated as Fe₂O₃) | 0 | 0.03 | 0.03 | 0.03 | 0.05 |
| X-Y | -10 | 19.14 | 10.38 | 27.67 | 1.85 |
| α₁ (×10⁷/°C) | 60.1 | 73.5 | 61.5 | 91.5 | 40.4 |
| Glass transition point (°C) | 557 | 585 | 587 | 568 | 570 |
| Deformation point (°C) | 623 | 648 | 667 | 629 | 708 |
| α₂ (×10⁻⁷/°C) | 391 | 399 | 338 | 360 | 295 |
| α₂-α₁ (×10⁻⁷/°C) | 330.9 | 325.5 | 276.5 | 268.5 | 254.6 |
| Density (g/cm³) | 2.33 | 2.45 | 2.39 | 2.49 | 2.33 |
| Young's modulus (GPa) | 66.6 | 76.0 | 76.0 | 74.2 | 73.2 |
| Photoelastic constant (×10⁻⁷ cm²/kg) | 3.6 | 2.9 | 3.1 | 2.6 | 3.4 |
| Retardation (nm/cm) | 794 | 860 | 860 | 730 | 740 |
| Initiation stress (MPa) | 22.1 | 30.1 | 28.0 | 29.3 | 22.2 |

As evident from Table 1, with respect to the glass plate to be tempered of the present invention, the difference [X-Y] between the total content X of at least one oxide selected from the group consisting of MgO, CaO, BaO, Na₂O and K₂O contained in the glass composition and the content Y of B₂O₃ is within a range of from -5 to 10 mol%, the linear expansion coefficient α₂ in a high temperature region between the glass transition point and the deformation point is so high as at least 500×10⁻⁷/°C while the average linear thermal expansion coefficient α₁ at from 50 to 350°C is suppressed to less than 100×10⁻⁷/°C, and the difference [α₂-α₁] between the average linear expansion coefficient α₁ and the linear expansion coefficient α₂ is at least 450×10⁻⁷/°C. Accordingly, a high initiation stress of at least 35 MPa can be obtained by physical reinforcement by air quenching reinforcement method of heating the glass plate to be tempered to the vicinity of the softening point or the deformation point temperature and then quenching it.

### INDUSTRIAL APPLICABILITY

The glass plate of the present invention is used for tempered glass for windows of vehicles such as cars, trucks, buses, trains, ships and aircrafts, tempered glass used for headlights and taillights, tempered glass for buildings, for windows, doors and show windows of building and houses, tempered glass for furniture or office supplies such as partitions, desktops, bookshelves and showcases, and tempered glass for consumer electronics such as cookware.

The entire disclosure of Japanese Patent Application No. 2011-207710 filed on September 22, 2011 including specification, claims and summary is incorporated herein by reference in its entirety.

## Claims

1. A glass plate to be tempered, which contains, as components in a glass composition, B₂O₃ in a range of from 12.5 to 35 mol% in the composition and contains at least one compound selected from the group consisting of MgO, CaO, BaO, Na₂O and K₂O, and the difference [X-Y] between the total content X of these compounds in the composition and the content Y of B₂O₃ in the composition being within a range of from -5 to 10 mol%, and which is to be tempered by heating and quenching.

2. The glass plate to be tempered according to Claim 1, which has a glass composition containing, as components in the glass composition, as represented by the following oxides, B₂O₃, SiO₂ and Na₂O and further at least one member selected from the group consisting of CaO, BaO, MgO and K₂O, and in the glass composition, the content of B₂O₃ being from 12.5 to 35 mol%, and the difference [X-Y] between the content Y of B₂O₃ and the total content X of the above components Na₂O, K₂O, CaO, BaO and MgO being within a range of from -5 to 10 mol%, and which is to be tempered by heating and quenching.

3. The glass plate to be tempered according to Claim 1 or 2, wherein the difference [α₂-α₁] between the average linear expansion coefficient α₁ at from 50 to 350°C and the linear expansion coefficient α₂ at a temperature in the middle of the glass transition point and the deformation point is at least 450×10⁻⁷/°C.

4. The glass plate to be tempered according to any one of Claims 1 to 3, wherein the average linear expansion coefficient α₁ at from 50 to 350°C is at least 30×10⁻⁷/°C and less than 100×10⁻⁷/°C.

5. The glass plate to be tempered according to any one of Claims 1 to 3, wherein the linear expansion coefficient α₂ at a temperature in the middle of the glass transition point and the deformation point is at least 500×10⁻⁷/°C and at most 1,300×10⁻⁷/°C.

6. A tempered glass plate which is obtained by tempering the glass plate to be tempered as defined in any one of Claims 1 to 5 by heating and quenching, and which has an initiation stress after tempering of at least 35 MPa.
